# EUROPÄISCHE PATENTSCHRIFT

(11) **EP 3 749 888 B1**
(45) Veröffentlichungstag und Bekanntmachung des Hinweises auf die Patenterteilung: **07.06.2023**
(21) Anmeldenummer: 19701954.0
(22) Anmeldetag: 17.01.2019
(51) Int. Cl.: F16L 58/10, F16L 58/18, F16L 9/08, F16L 25/00, E03F 3/04

(54) **STECKVERBINDUNG ZWISCHEN ZWEI JE EINE INNENAUSKLEIDUNG AUS KUNSTSTOFF AUFWEISENDEN ROHRFÖRMIGEN WERKSTÜCKEN AUS BETON**
PLUG CONNECTION BETWEEN TWO TUBULAR WORKPIECES MADE OF CONCRETE, EACH WORKPIECE HAVING AN INNER LINER MADE OF PLASTIC
RACCORD ENFICHABLE ENTRE DEUX PIÈCES TUBULAIRES EN BÉTON PRÉSENTANT CHACUNE UN REVÊTEMENT INTÉRIEUR EN MATIÈRE PLASTIQUE

(30) Priorität: 05.02.2018 AT 501052018
(43) Veröffentlichungstag der Anmeldung: 16.12.2020
(73) Patentinhaber: Schlüsselbauer, Ulrich, 4674 Altenhof am Hausruck (AT)
(72) Erfinder: Schlüsselbauer, Ulrich, 4674 Altenhof am Hausruck (AT)
(74) Vertreter: Hübscher & Partner Patentanwälte GmbH
(86) Internationale Anmeldenummer: PCT/AT2019/050006
(87) Internationale Veröffentlichungsnummer: WO 2019/148218

(56) Entgegenhaltungen:
- DE-A1- 2 541 999
- DE-U1- 8 234 849
- JP-A- S6 271 614

## Beschreibung

### Technisches Gebiet

Die Erfindung bezieht sich auf eine Steckverbindung zwischen zwei je eine Innenauskleidung aus Kunststoff aufweisenden rohrförmigen Werkstücken aus Beton, von denen eines ein Spitzende und das andere ein das Spitzende aufnehmendes Muffenende bilden, wobei die Innenauskleidungen die Stirnfläche des Spitzendes bzw. den Muffenspiegel übergreifende, umlaufende Dichtflansche aufweisen, zwischen denen eine Fugendichtung vorgesehen ist.

### Stand der Technik

Bei Steckverbindungen zwischen rohrförmigen Werkstücken aus Beton mit einer Innenauskleidung aus Kunststoff als Korrosionsschutz, beispielsweise zwischen Rohren oder Schachtringen, ergibt sich die Schwierigkeit, zwischen den Innenauskleidungen eine Fugendichtung vorzusehen, die eine korrosionsfeste Verbindung zwischen den Innenauskleidungen der miteinander zu verbindenden Werkstücke schafft, ohne vor Ort aufwendige Dichtungsmaßnahmen setzen zu müssen. Zu diesem Zweck ist es bereits bekannt, die Innenauskleidungen aus einem thermoplastischen Kunststoff im Bereich der Spitzenden und der Muffenenden durch Wärmeeinwirkung so umzuformen, dass radial nach außen abstehende, umlaufende Dichtflansche erhalten werden, die nach dem Gießen der rohrförmigen Betonkörper die Stirnfläche des Spitzendes bzw. den Muffenspiegel übergreifen, sodass beim Einführen des Spitzendes des einen in das Muffenende des anderen der beiden zu verbindenden Werkstücke die Dichtflansche des Spitzendes und des Muffenendes einander axial gegenüberliegen und zwischen sich eine entsprechende, gegebenenfalls lastübertragende Fugendichtung aufnehmen können, die die beiden Innenauskleidungen über die Dichtflansche dicht und korrosionsfest verbindet. Nachteilig ist allerdings der für die Ausbildung der Dichtflansche erforderliche Herstellungsaufwand und die Beschränkung auf Werkstückquerschnitte mit für die Umformung der Randabschnitte der Innenauskleidungen zu radial abstehenden Dichtflanschen ausreichend großen Krümmungsradien.

Bekannte Steckverbindungen für rohrförmige Werkstücke aus Beton sind beispielsweise in DE 25 41 999 A1 offenbart.

### Darstellung der Erfindung

Der Erfindung liegt somit die Aufgabe zugrunde, eine Steckverbindung zwischen zwei je eine Innenauskleidung aus Kunststoff aufweisenden rohrförmigen Werkstücken aus Beton so auszugestalten, dass eine allen Anforderungen genügende, korrosionsfeste Fugendichtung mit einem vergleichsweise geringen Herstellungsaufwand geschaffen werden kann, ohne den Beschränkungen durch vorgegebene Mindestradien für den freien Strömungsquerschnitt unterworfen zu sein. Ausgehend von einer Steckverbindung der eingangs geschilderten Art löst die Erfindung die gestellte Aufgabe dadurch, dass die Innenauskleidungen endseitig mit einem umlaufenden, elastomeren Winkelprofil versehen sind, das den umlaufenden Rand der Innenauskleidung in einer stirnseitigen Profilnut seines achsparallelen Schenkels aufnimmt und dessen achsnormaler Schenkel den Dichtflansch formt, und dass der in die Profilnut eingreifende Rand der Innenauskleidung gegenüber dem anschließenden Abschnitt der Innenauskleidung um die Dicke der vom Betonkörper der Werkstücke abgewandten Nutwand radial nach außen versetzt verläuft.

Da zufolge dieser Maßnahmen die die Stirnfläche des Spitzendes bzw. den Muffenspiegel übergreifenden Dichtflansche durch einen Schenkel eines elastomeren Winkelprofils gebildet werden, braucht zur Ausbildung der Dichtflansche nicht mehr auf die Verformungseigenschaften der Innenauskleidung Rücksicht genommen zu werden, was nicht nur die dadurch bedingten Beschränkungen hinsichtlich des Werkstückquerschnitts vermeidet, sondern auch die Voraussetzungen für eine einfache Herstellung schafft, weil lediglich der umlaufende Rand der Innenauskleidung in die stirnseitige Profilnut des achsparallelen Schenkels des Winkelprofils eingeführt werden muss, um die Innenauskleidungen mit für die Fugendichtung wesentlichen Dichtflanschen zu versehen, die die Stirnflächen des Spitzendes und den Muffenspiegel des Betonkörpers der rohrförmigen Werkstücke zumindest in einem für die Aufnahme einer Fugendichtung ausreichenden, umlaufenden Randbereich abdecken.

Der Eingriff des umlaufenden Rands der Innenauskleidung in die stirnseitige Profilnut des achsparallelen Schenkels des Winkelprofils bildet bei einer entsprechenden Eingriffstiefe eine Labyrinthdichtung, die im Allgemeinen einen Durchgriff aggressiver Medien zum Betonkörper ausschließt. Die Dichtwirkung kann jedoch verstärkt werden, wenn die Nutwände der stirnseitigen Profilnut im Randbereich unter einer elastischen Vorspannung am umlaufenden Rand der Innenauskleidung anliegen. Außerdem kann der Rand der Innenauskleidung innerhalb der Profilnut zumindest bereichsweise festgeklebt werden, was nicht nur Einfluss auf die Dichtwirkung nimmt, sondern eine zusätzliche Abziehsicherung des Winkelprofils von der Innenauskleidung mit sich bringt, obwohl das Winkelprofil üblicherweise durch in den Betonkörper ragende Ansätze im Betonkörper des Werkstücks verankert sein wird.

Besonders einfache Konstruktionsverhältnisse ergeben sich, wenn die Fugendichtung Teil des Winkelprofils der Innenauskleidung eines der beiden Werkstücke ist, also entweder dem Winkelprofil des Spitzendes oder des Muffenendes eines Werkstücks zugeordnet wird. In diesem Fall braucht keine gesonderte Fugendichtung zwischen dem Spitzende und dem Muffenende der durch eine Steckverbindung zu verbindenden Werkstücke eingebracht zu werden, was die Handhabung erleichtert. Dies ist möglich, weil das Winkelprofil nicht aus einem für die Innenauskleidung vorzusehenden Kunststoff, sondern aus einem auch als Fugendichtung geeigneten, elastomeren Werkstoff gefertigt wird.

Verläuft der in die Profilnut eingreifende Rand der Innenauskleidung gegenüber dem anschließenden Abschnitt der Innenauskleidung erfindungsgemäß um die Dicke der vom Betonkörper der Werkstücke abgewandten Nutwand radial nach außen versetzt, so liegt die den Strömungsquerschnitt der rohrförmigen Werkstücke begrenzende Fläche des achsparallelen Schenkels der Winkelprofile in einer Flucht mit der den Strömungsquerschnitt begrenzenden Fläche der Innenauskleidung, sodass durch das gesonderte Zusatzprofil keine Einschnürung des Strömungsquerschnitts befürchtet werden muss. Aufgrund der im Vergleich zur Umfangslänge vergleichsweise geringen Durchmessererweiterung der Innenauskleidung im Bereich des in die Profilnut eingreifenden Rands kann die damit verbundene Umfangslängung der Innenauskleidung durch die elastischen Eigenschaften des Kunststoffs der Innenauskleidung aufgenommen werden, sodass es hierfür im Allgemeinen keiner gesonderten Umformung der Innenauskleidungen bedarf.

### Kurze Beschreibung der Erfindung

In der Zeichnung ist der Erfindungsgegenstand beispielsweise dargestellt. Es zeigen
- Fig. 1: eine erfindungsgemäße Steckverbindung zwischen dem Spitzende und dem Muffenende zweier rohrförmiger Werkstücke in einem axialen Schnitt durch die Werkstückwände und
- Fig. 2: einen Schnitt durch die Fugendichtung im unbelasteten Zustand unmittelbar vor der Endstellung nach Fig. 1 in einem größeren Maßstab.

### Wege zur Ausführung der Erfindung

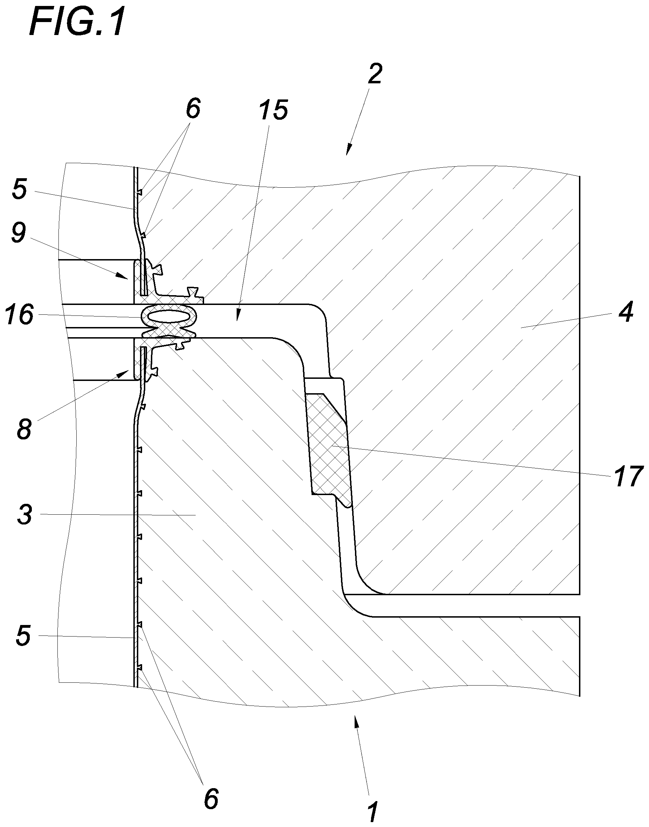

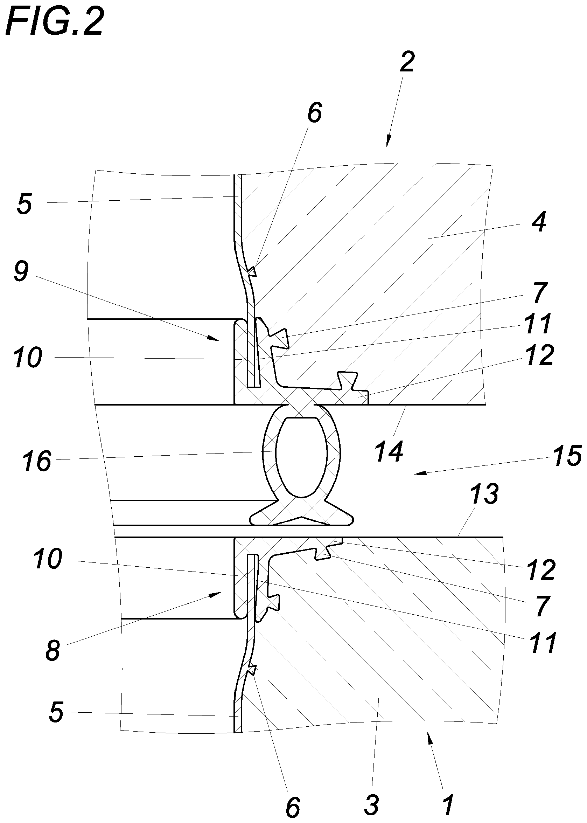

Wie insbesondere der Fig. 1 zu entnehmen ist, weisen die miteinander zu verbindenden rohrförmigen Werkstücke 1, 2 aus Beton, beispielsweise Rohre oder Schachtringe, an einer Stirnseite ein Spitzende 3 und auf der gegenüberliegenden Stirnseite ein Muffenende 4 auf. Die Werkstücke 1, 2 sind jeweils mit einer Innenauskleidung 5 aus Kunststoff versehen, die mit Ankernoppen 6 im Betonkörper verankert sind. Endseitig sind die Innenauskleidungen 5 je mit einem umlaufenden, mithilfe von Ansätzen 7 im Betonkörper verankerten Winkelprofilen 8, 9 aus einem elastomeren Werkstoff versehen, der aufgrund seiner elastischen Dehnbarkeit dem Strömungsquerschnitt der Werkstücke 1, 2 auch im Bereich kleinerer Radien folgen kann. Wie insbesondere aus der Fig. 2 ersichtlich ist, bilden die achsparallelen Schenkel 10 der Winkelprofile 8, 9 eine umlaufende, stirnseitige Profilnut 11, in die der Umlaufende Rand der Innenauskleidung 5 eingreift. Der andere radial nach außen abstehende Schenkel formt einen Dichtflansch 12, der im Falle des Winkelprofils 8 die Stirnfläche 13 des Spitzendes 3 übergreift und beim Winkelprofil 9 im Bereich des Muffenendes 4 den Muffenspiegel 14 in einem Randbereich abdeckt.

In der in Fig. 1 dargestellten Steckverbindung der beiden Werkstücke 1 und 2 liegen somit die Dichtflansche 12 der beiden Winkelprofile 8, 9 einander bezüglich der sich zwischen der Stirnfläche 13 des Spitzendes 3 und dem Muffenspiegel 14 ergebenden Fuge 15 gegenüber, sodass zwischen den Dichtflanschen 12 eine umlaufende Fugendichtung 16 vorgesehen werden kann, die dicht an den Dichtflanschen 12 der Winkelprofile 8, 9 anliegend die Fuge 15 gegenüber durch die rohrförmigen Werkstücke 1, 2 strömenden, aggressiven Medien abschließt. Um die Fuge 15 auch gegenüber äußeren Einflüssen abzudichten, kann eine zusätzliche Dichtung 17 zwischen dem Spitzende 3 und dem Muffenende 4 vorgesehen werden.

Wie in der Fig. 2 angedeutet ist, kann die Profilnut 11 der Winkelprofile 8, 9 zur Aufnahme des umlaufenden Rands der jeweiligen Innenauskleidung 5 diesen umlaufenden Rand mit Vorspannung umfassen, sodass eine dichte Verbindung zwischen der Innenauskleidung 5 und den Winkelprofilen 8, 9 nur durch das Aufstecken der Winkelprofile 8, 9 auf den umlaufenden Rand der Innenauskleidung 5 erreicht wird, wiewohl im Bedarfsfall auch zusätzliche Maßnahmengetroffen werden können, z. B. durch ein Einkleben des Rands der Innenauskleidung 5 in die Profilnut 11.

Die Herstellung von Werkstücken 1, 2 für eine erfindungsgemäße Steckverbindung ist einfach, weil an der Innenauskleidung 5 keine Verformungsarbeiten erforderlich sind. Nach dem Aufstecken der Winkelprofile 8, 9 auf die Innenauskleidung 5 sowie dem Verbinden der Innenauskleidung 5 und der Winkelprofile 8, 9 zu einem umfangsgeschlossenen Hohlkörper kann dieser Hohlkörper die Außenwand eines Formkerns abdecken, sodass beim Gießen der rohförmigen Werkstücke zwischen dem Formkern und einem Formmantel der Betonkörper in einem Arbeitsgang mit der Innenauskleidung 5 und den Winkelprofilen 8, 9 gefertigt werden kann, und zwar mit einem Strömungsquerschnitt der rohrförmigen Werkstücke 1, 2, der im Bereich der Winkelprofile 8, 9 keine Einschnürung mit sich bringt.

Da die Winkelprofile 8, 9 aus einem elastomeren Werkstoff gefertigt sind, kann die Fugendichtung 16 einem der beiden Winkelprofile zugeordnet und gemäß der Fig. 2 einstückig mit diesem hergestellt werden, wobei es durchaus möglich ist, für die Fugendichtung auch einen anderen Werkstoff zu wählen.

## Patentansprüche

1. Steckverbindung, umfassend zwei je eine Innenauskleidung (5) aus Kunststoff aufweisende rohrförmige Werkstücke (1, 2) aus Beton, von denen eines ein Spitzende (3) und das andere ein das Spitzende (3) aufnehmendes Muffenende (4) bilden, wobei der umlaufende Rand der Innenauskleidungen (5) mit die Stirnfläche (13) des Spitzendes (3) bzw. den Muffenspiegel (14) übergreifenden, umlaufenden Dichtflanschen (12) verbunden ist, zwischen denen eine Fugendichtung (16) vorgesehen ist, **dadurch gekennzeichnet, dass** die Innenauskleidungen (5) endseitig mit einem umlaufenden, elastomeren Winkelprofil (8, 9) versehen sind, das den umlaufenden Rand der Innenauskleidung (5) in einer stirnseitigen Profilnut (11) seines achsparallelen Schenkels (10) aufnimmt und dessen achsnormaler Schenkel den Dichtflansch (12) formt, und dass der in die Profilnut (11) eingreifende Rand der Innenauskleidung (5) gegenüber dem anschließenden Abschnitt der Innenauskleidung (5) um die Dicke einer vom Betonkörper der Werkstücke (1, 2) abgewandten Nutwand der stirnseitigen Profilnut (11) radial nach außen versetzt verläuft.

2. Steckverbindung nach Anspruch 1, **dadurch gekennzeichnet, dass** die Nutwände der stirnseitigen Profilnut (11) im Randbereich unter einer elastischen Vorspannung am umlaufenden Rand der Innenauskleidung (5) anliegen.

3. Steckverbindung nach Anspruch 1 oder 2, **dadurch gekennzeichnet, dass** der Rand der Innenauskleidung (5) innerhalb der Profilnut (11) zumindest bereichsweise festgeklebt ist.

4. Steckverbindung nach einem der Ansprüche 1 bis 3, **dadurch gekennzeichnet, dass** die Fugendichtung (16) Teil des Winkelprofils (8, 9) der Innenauskleidung (5) eines der beiden Werkstücke (1, 2) ist.

## Claims

1. Plug connection comprising two tubular workpieces (1, 2) made of concrete and each comprising an inner liner (5) made of synthetic material, one of the tubular workpieces forming a tip end (3) and the other forming a socket end (4) receiving the tip end (3), wherein the circumferential edge of the inner liners (5) is connected to circumferential sealing flanges (12) which engage over the end surface (13) of the tip end (3) or the socket face (14), a joint seal (16) being provided between the sealing flanges, **characterised in that** the inner liners (5) are provided on the end side with a circumferential, elastomeric angular profile (8, 9) which receives the circumferential edge of the inner liner (5) in an end-side profile groove (11) of its axis-parallel limb (10), and the axis-normal limb thereof forms the sealing flange (12), and **in that** the edge of the inner liner (5) engaging into the profile groove (11) extends in a radially outwardly offset manner with respect to the adjoining section of the inner liner (5) by the thickness of a groove wall of the end-side profile groove (11) facing away from the concrete body of the workpieces (1, 2).

2. Plug connection as claimed in claim 1, **characterised in that** the groove walls of the end-side profile groove (11) lie in the edge region elastically biased against the circumferential edge of the inner liner (5).

3. Plug connection as claimed in claim 1 or 2, **characterised in that** the edge of the inner liner (5) is fixedly adhered within the profile groove (11) at least in regions.

4. Plug connection as claimed in any one of claims 1 to 3, **characterised in that** the joint seal (16) is part of the angular profile (8, 9) of the inner liner (5) of one of the two workpieces (1, 2).

## Revendications

1. Raccord enfichable, constitué de deux pièces tubulaires (1, 2) en béton qui présentent chacune un revêtement intérieur (5) en matière plastique, dont l'une forme un embout mâle (3) et dont l'autre forme un embout femelle (4) destiné à recevoir l'embout mâle (3), dans lequel le bord périphérique des revêtements intérieurs (5) est relié à des brides d'étanchéité périphériques (12) qui s'engagent sur la face frontale (13) de l'embout mâle (3) respectivement sur la face de fond de l'embout femelle (14), et entre lesquelles une garniture d'étanchéité (16) est prévue, **caractérisé en ce que** les revêtements intérieurs (5) sont pourvus à leur extrémité d'un profilé angulaire circonférentiel en élastomère (8, 9) qui est destiné à recevoir le bord périphérique du revêtement intérieur (5) à l'intérieur d'une rainure profilée frontale (11) de sa branche (10) parallèle à l'axe et dont la branche normale à l'axe forme la bride d'étanchéité (12), et **en ce que** le bord du revêtement intérieur (5) qui s'engage à l'intérieur de la rainure profilée (11) s'étend radialement en direction de l'extérieur en étant décalé par rapport à la section adjacente du revêtement intérieur (5) de l'épaisseur d'une paroi de la rainure profilée frontale (11) opposée au corps en béton des pièces (1, 2).

2. Raccord enfichable selon la revendication 1, **caractérisé en ce que** les parois de la rainure profilée frontale (11) s'appliquent dans la région périphérique sous une précontrainte élastique contre le bord périphérique du revêtement intérieur (5).

3. Raccord enfichable selon la revendication 1 ou 2, **caractérisé en ce que** le bord du revêtement intérieur (5) est collé à l'intérieur de la rainure profilée (11) au moins par endroits.

4. Raccord enfichable selon l'une quelconque des revendications 1 à 3, **caractérisé en ce que** la garniture d'étanchéité (16) fait partie du profilé angulaire (8, 9) du revêtement intérieur (5) de l'une des deux pièces (1, 2).
